# EUROPÄISCHE PATENTSCHRIFT

(11) **EP 3 580 080 B1**
(45) Veröffentlichungstag und Bekanntmachung des Hinweises auf die Patenterteilung: **03.03.2021**
(21) Anmeldenummer: 18702676.0
(22) Anmeldetag: 31.01.2018
(51) Int. Cl.: B60K 6/48, B60K 6/547, B60K 6/365, B60K 6/40

(54) **AUFBAU EINES GETRIEBES FÜR EIN HYBRIDFAHRZEUG, ANTRIEBSSTRANG UND HYBRIDFAHRZEUG**
CONSTRUCTION OF A TRANSMISSION FOR A HYBRID VEHICLE, DRIVE TRAIN AND HYBRID VEHICLE
MONTAGE D'UNE TRANSMISSION POUR UN VÉHICULE HYBRIDE, GROUPE MOTOPROPULSEUR ET VÉHICULE HYBRIDE

(30) Priorität: 07.02.2017 DE 102017201894
(43) Veröffentlichungstag der Anmeldung: 18.12.2019
(73) Patentinhaber: ZF Friedrichshafen AG, 88046 Friedrichshafen (DE)
(72) Erfinder: BAYER, Oliver, 88131 Lindau (DE); BREHMER, Martin, 88069 Tettnang (DE); DEBERNITZ, Leschek, 88097 Eriskirch (DE); MICHEL, Christian, 88214 Ravensburg (DE); KUTTER, Fabian, 88079 Kressbronn (DE); ZIEMER, Peter, 88069 Tettnang (DE)
(74) Vertreter: ZF Friedrichshafen AG
(86) Internationale Anmeldenummer: PCT/EP2018/052339
(87) Internationale Veröffentlichungsnummer: WO 2018/145967

(56) Entgegenhaltungen:
- EP-A2- 0 776 779
- DE-T5-112008 001 374
- DE-T5-112012 003 406
- FR-A1- 2 869 571

## Beschreibung

Die Erfindung betrifft den Aufbau eines Getriebes für ein Hybridfahrzeug mit quer zur Fahrtrichtung des Hybridfahrzeugs ausgerichtetem Antriebsstrang. Die Erfindung betrifft ferner einen Antriebsstrang sowie ein Hybridfahrzeug mit einem Getriebe, welches einen solchen Aufbau zeigt.

Die Patentanmeldung DE 10 2013 215 114 A1 der Anmelderin beschreibt einen Hybridantrieb für ein Kraftfahrzeug, welcher quer zur Fahrtrichtung des Kraftfahrzeugs ausgerichtet ist. Ein Verbrennungsmotor ist über eine Kupplung mit der Eingangswelle eines automatisierten Schaltgetriebes verbunden, dessen Ausgangswelle das Tellerrad eines Achsdifferentials antreibt. Eine elektrische Maschine ist achsparallel zu Eingangswelle, Ausgangswelle und Achsdifferential angeordnet, und ist über zwei Zahnräder mit dem Hohlrad eines Planetengetriebes verbunden, welches koaxial zur Ausgangswelle angeordnet ist. Eine konkrete räumliche Anordnung der Komponenten ist dabei nicht offenbart.

Die Veröffentlichung DE 11 2008 001 374 T5 beschreibt eine Hybridantriebsvorrichtung mit einer Eingangswelle, die mit einem Verbrennungsmotor verbunden ist, einer achsparallel dazu angeordneten Elektromaschine, sowie einem koaxial zur Eingangswelle angeordneten Getriebe, dessen Ausgangswelle über eine Vorgelegewelle ein Differentialgetriebe antreibt. Die Elektromaschine ist über einen Reduktionsmechanismus mit der Getriebeeingangswelle verbunden, welche über eine Kupplung mit der Eingangswelle verbunden ist. Die Drehachse der Vorgelegewelle liegt dabei räumlich oberhalb einer Verbindungslinie zwischen der Drehachse der Eingangswelle und der Drehachse des Differentialgetriebes. Die Elektromaschine ist räumlich unmittelbar oberhalb der Eingangswelle angeordnet. Eine derartige Anordnung führt zu einem unerwünscht großen Bauraumbedarf, da die Elektromaschine zur Gänze oberhalb der übrigen Komponenten angeordnet ist.

Die Veröffentlichung WO 2012/117501 A1 offenbart ein CVT-Getriebe für einen Hybridantriebstrang. Ein eingangsseitiges Reibrad ist koaxial zur Ausgangswelle des Verbrennungsmotors angeordnet, und ein ausgangsseitiges Reibrad ist achsparallel dazu angeordnet. Ein Elektromotor ist achsparallel zu den Reibrädern angeordnet, und wirkt über eine Vorgelegewelle auf das eingangsseitige Reibrad. Eine Differentialvorrichtung ist achsparallel zu den Reibrädern und zu dem Elektromotor angeordnet, wobei das ausgangsseitige Reibrad mit der Differentialvorrichtung über eine Verzahnung direkt wirkverbunden ist. Der Elektromotor ist räumlich oberhalb der Differentialvorrichtung angeordnet, und überlappt die beiden Reibräder. Auch eine solche Anordnung weist einen großen Bauraumbedarf auf, da die übersetzungsbildenden Reibräder zwangsläufig auf zwei Achsen anzuordnen sind. Der Elektromotor ist zum überwiegenden Anteil oberhalb der übrigen Komponenten anzuordnen.

Die Patentanmeldung EP 1 440 833 A2 beschreibt ein Getriebe für einen Hybridantrieb, welches einen ersten und einen zweiten Motor-Generator aufweist, die über ein Planetengetriebe mit insgesamt vier Wellen zusammenwirken. Dadurch ist das Übersetzungsverhältnis zwischen einem Eingangselement und einem Ausgangselement des Getriebes stufenlos einstellbar. Das Ausgangselement ist über eine Zwischenwelle mit einem Differential verbunden. Die Drehachse eines der Motor-Generatoren ist räumlich oberhalb der Drehachse des Eingangselements angeordnet. Die Drehachse der Zwischenwelle ist räumlich unterhalb der Drehachsen des Eingangselements und des Differentials angeordnet. Durch die insgesamt zwei Motor-Generatoren ist für ein solches Getriebe ein hoher Bauraumbedarf erforderlich.

Es ist daher Aufgabe der Erfindung einen Aufbau für ein Getriebe anzugeben, welches sich durch einen geringen Bauraumbedarf auszeichnet.

Die Aufgabe wird durch den im Patentanspruch 1 angegebenen Getriebeaufbau gelöst. Vorteilhafte Ausgestaltungen ergeben sich aus den Unteransprüchen, der Beschreibung sowie aus den Figuren.

Es wird ein Aufbau eines Getriebes für ein Hybridfahrzeug mit quer zur dessen Fahrtrichtung ausgerichtetem Antriebsstrang vorgeschlagen, also mit einer sogenannten Front-Quer- oder Heck-Quer-Anordnung. Das Getriebe weist eine Antriebswelle, eine Zwischenwelle, ein Differentialgetriebe sowie genau eine zum Antrieb des Hybridfahrzeugs eingerichtete elektrische Maschine mit einem drehfesten Stator und einem drehbaren Rotor auf. Antriebswelle, Zwischenwelle, Differentialgetriebe und Rotor weisen achsparallel zueinander angeordnete Drehachsen auf.

Die Antriebswelle bildet eine drehmomentübertragende Schnittstelle zu einem Verbrennungsmotor des Hybridfahrzeugs. Alternativ dazu ist die Antriebswelle mit einer solchen Schnittstelle über eine Kupplung oder einen Freilauf verbunden. Das Differentialgetriebe weist drehmomentübertragende Schnittstellen zu Antriebswellen des Hybridfahrzeugs. Die Antriebswellen sind mit Antriebsrädern des Hybridfahrzeugs verbunden.

Das Getriebe ist dazu eingerichtet, verschiedene Übersetzungsverhältnisse zwischen der Antriebswelle und einer koaxial zur Antriebswelle angeordneten Abtriebswelle bereitzustellen. Ein derartiges Getriebe kann beispielsweise mittels Planetenradsätzen und damit zusammenwirkenden Schaltelementen gebildet werden. Das an der Abtriebswelle anliegende Drehmoment wird über die Zwischenwelle zum Differentialgetriebe übertragen.

Der Rotor der elektrischen Maschine ist entweder mit der Antriebswelle oder mit einer weiteren Welle des Getriebes, welche an der Übersetzungsbildung zwischen Antriebswelle und Abtriebswelle beteiligt ist, ständig verbunden. Die ständige Verbindung erfolgt dabei über ein konstantes Übersetzungsverhältnis, beispielsweise über einen ein- oder mehrstufigen Stirnradtrieb oder über einen Kettentrieb. Die Drehachse des Rotors ist räumlich oberhalb einer Verbindungslinie zwischen der Drehachse der Antriebswelle und der Drehachse des Differentialgetriebes angeordnet.

Erfindungsgemäß ist die Drehachse der Zwischenwelle räumlich unterhalb der Verbindungslinie zwischen der Drehachse der Antriebswelle und der Drehachse des Differentialgetriebes angeordnet. Die geometrischen Angaben "räumlich unterhalb" und "räumlich oberhalb" beziehen sich dabei auf die Einbaulage des Getriebes im Hybridfahrzeug. Eine solche Anordnung führt zu einem besonders kompakten Aufbau, da die Bildung der verschiedenen Übersetzungsverhältnisse in einem koaxialen System erfolgt, und nur eine elektrische Maschine zum Fahrzeugantrieb vorhanden ist. Die Zwischenwelle ist nun, anders als sonst üblich, räumlich unterhalb der Verbindungslinie angeordnet, wodurch die elektrische Maschine den sonst von der Zwischenwelle genutzten Bauraum beanspruchen kann.

Bei einer Betrachtung in Achsrichtung bildet eine Verbindung der Drehachsen von Antriebswelle, Zwischenwelle und Differentialgetriebe ein Dreieck. Vorzugsweise ist die elektrische Maschine jener Seite dieses Dreiecks zugeordnet, welche die Zwischenwelle nicht berührt. Dadurch ist ein besonders kompakter Aufbau des Getriebes möglich.

Vorzugsweise ist ein Abstand in Fahrtrichtung des Hybridfahrzeugs zwischen der Drehachse des Rotors und der Drehachse des Differentialgetriebes kleiner als ein Abstand in Fahrtrichtung zwischen der Drehachse der Antriebswelle und der Drehachse des Rotors, insbesondere erheblich kleiner.

Gemäß einer bevorzugten Ausgestaltung sind die unterschiedlichen Übersetzungsverhältnisse zwischen Antriebswelle und Abtriebswelle mittels mehreren Planetenradsätzen und damit zusammenwirkenden Schaltelementen bildbar.

Vorzugsweise ist ein Getriebe mit dem zuvor beschriebenen Aufbau Bestandteil eines Hybridfahrzeugs, bzw. einen Antriebsstrangs für ein solches Hybridfahrzeug, welcher neben dem Getriebe auch einen Verbrennungsmotor aufweist.

Ausführungsbeispiele der Erfindung sind nachfolgend anhand der beigefügten Figuren detailliert beschrieben. Es zeigen:
Fig. 1 eine schematische Ansicht eines Hybridfahrzeugs mit quer zur Fahrtrichtung des Hybridfahrzeugs ausgerichtetem Antriebsstrang;
Fig. 2 bis Fig. 7 schematischen Ansichten von Antriebssträngen mit Getriebe für ein solches Hybridfahrzeug;
Fig. 8 eine schematische Ansicht eines bespielhaften Getrieberadsatzes für derartige Antriebsstränge;
Fig. 9 und Fig. 10 je eine Ansicht zur Positionierung von Antriebswelle, Zwischenwelle, Differentialgetriebe und elektrischer Maschine für derartige Getriebe; und
Fig. 11 eine beispielhafte Seitenansicht eines Gehäuses für ein solches Getriebe.

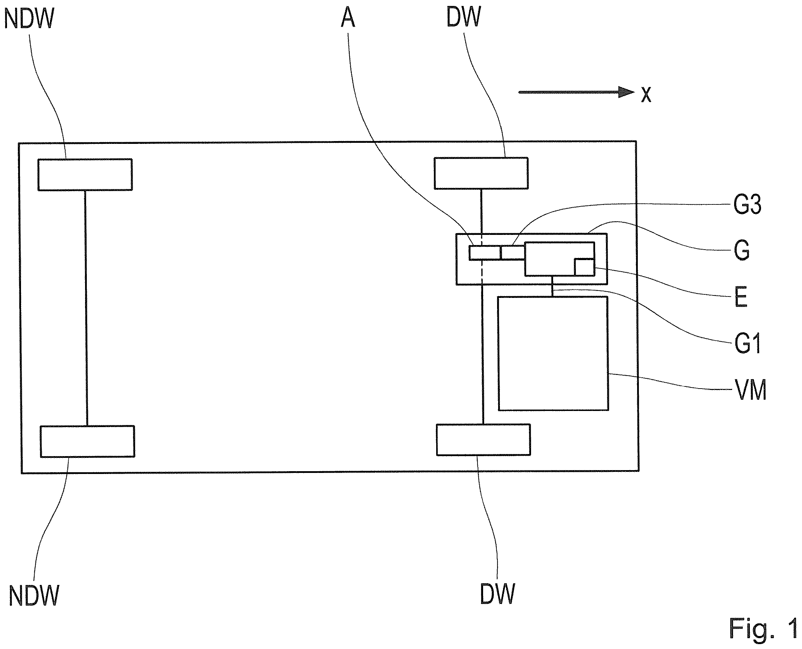

Fig. 1 zeigt eine schematische Ansicht eines Hybridfahrzeugs mit quer zur Fahrtrichtung x ausgerichtetem Antriebsstrang. Der Antriebsstrang weist zwei angetriebene Räder DW und zwei nicht-angetriebene Räder NDW auf. Ein Verbrennungsmotor VM ist mit einem Getriebe G über dessen Antriebswelle G1 verbunden. Das Getriebe G weist ferner eine elektrische Maschine E, eine Zwischenwelle G3 und ein Differentialgetriebe A auf. Die Antriebswelle G1 bildet somit eine drehmomentübertragende Schnittstelle zum Verbrennungsmotor VM. Das Differentialgetriebe A weist zwei drehmomentübertragende Schnittstellen zu mit den Antriebsrädern DW verbundenen Antriebswellen auf.

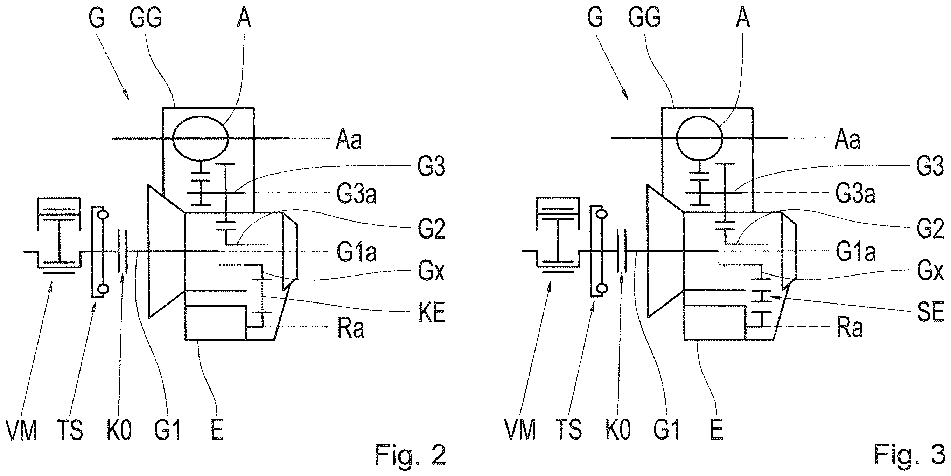

Fig. 2 zeigt eine schematische Ansicht des Antriebsstrangs für ein solches Hybridfahrzeug. Der Verbrennungsmotor VM ist über einen Torsionsschwingungsdämpfer TS und eine Kupplung K0 mit der Antriebswelle G1 des Getriebes G verbunden. Dies ist lediglich beispielhaft anzusehen. Der Verbrennungsmotor VM könnte auch ohne Kupplung K0 mit der Antriebswelle G1 verbunden sein. Alternativ dazu könnte die Kupplung K0 durch einen Freilauf ersetzt werden. Derartige Variationen sind für alle gegenständlichen Ausführungsbeispiele anwendbar.

Die Antriebswelle G1 dreht sich um die Drehachse G1a, welche koaxial zur Kurbelwellenachse des Verbrennungsmotors VM ist. Eine Abtriebswelle G2 des Getriebes G ist koaxial zur Antriebswelle G1 angeordnet. Das Getriebe G weist neben der Antriebswelle G1 und der Abtriebswelle G2 weitere Wellen auf, welche an der Übersetzungsbildung zwischen Antriebswelle G1 und Abtriebswelle G2 beteiligt sind, darunter eine Welle Gx. Der Rotor der elektrischen Maschine E ist über einen Kettentrieb KE mit der Welle Gx ständig verbunden. Durch den Kettentrieb KE besteht zwischen dem Rotor und der Welle Gx ein konstantes Übersetzungsverhältnis. Die elektrische Maschine E ist achsparallel zur Antriebswelle G1 angeordnet sind, wobei sich der Rotor um eine Drehachse Ra dreht.

Das Differentialgetriebe A ist achsparallel zur Antriebswelle G1 angeordnet, und dreht sich um eine Drehachse Aa. Im Leistungspfad zwischen der Abtriebswelle G2 und dem Differentialgetriebe A befindet sich eine Zwischenwelle G3, welche achsparallel zu Differentialgetriebe A und Antriebswelle G1 angeordnet ist. Die Zwischenwelle G3 dreht sich um eine Drehachse G3a.

Fig. 3 zeigt eine weitere schematische Ansicht eines Antriebsstrangs für ein Hybridfahrzeug gemäß Fig. 1, welcher im Wesentlichen dem in Fig. 2 dargestellten Antriebsstrang entspricht. Der Rotor der elektrischen Maschine E ist nun nicht über einen Kettentrieb mit der Welle Gx verbunden, sondern über einen Stirnradtrieb SE.

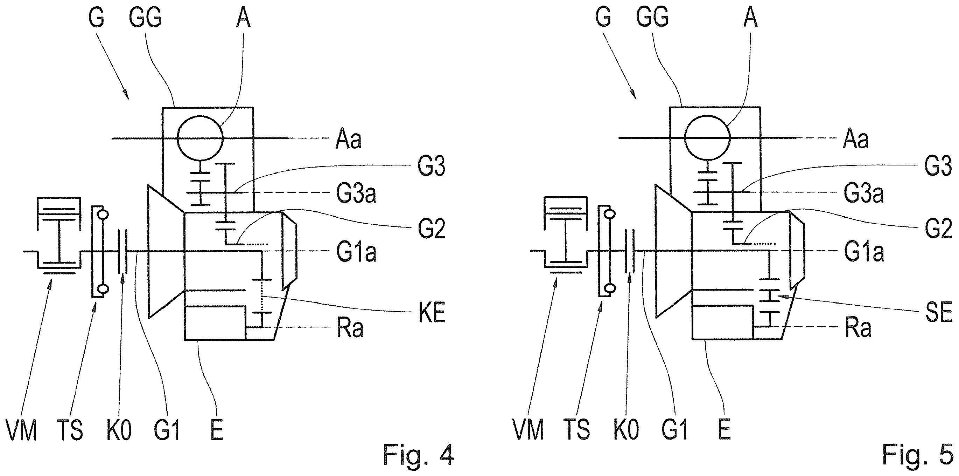

Fig. 4 zeigt eine weitere schematische Ansicht eines Antriebsstrangs für ein Hybridfahrzeug gemäß Fig. 1, welcher im Wesentlichen dem in Fig. 2 dargestellten Antriebsstrang entspricht. Der Rotor der elektrischen Maschine E ist nun nicht mehr mit der Welle Gx ständig verbunden, sondern mit der Antriebswelle G1. Die Anbindung erfolgt dabei über den Kettentrieb KE. Der Kettentrieb KE ist dabei an jenem axialen Ende des Getriebes G angeordnet, welches vom Verbrennungsmotor VM weg weist.

Fig. 5 zeigt eine weitere schematische Ansicht eines Antriebsstrangs für ein Hybridfahrzeug gemäß Fig. 1, welcher im Wesentlichen dem in Fig. 4 dargestellten Antriebsstrang entspricht. Der Rotor der elektrischen Maschine E ist nun nicht über einen Kettentrieb mit der Antriebswelle G1 verbunden, sondern über den Stirnradtrieb SE.

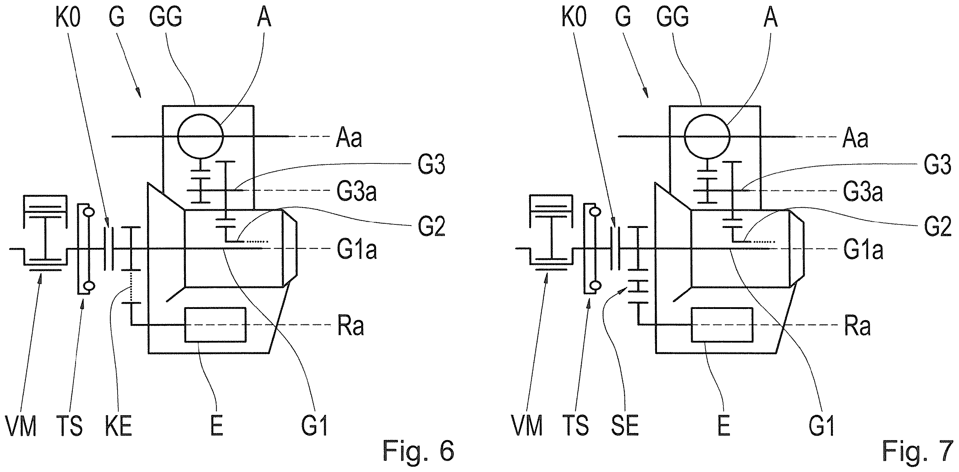

Fig. 6 zeigt eine weitere schematische Ansicht eines Antriebsstrangs für ein Hybridfahrzeug gemäß Fig. 1, welcher im Wesentlichen dem in Fig. 4 dargestellten Antriebsstrang entspricht. Der Kettentrieb KE ist nun an jenem axialen Ende des Getriebes G angeordnet, welches zum Verbrennungsmotor VM weist. Der Kettentrieb KE könnte auch innerhalb des Gehäuses GG des Getriebes G angeordnet sein.

Fig. 7 zeigt eine weitere schematische Ansicht eines Antriebsstrangs für ein Hybridfahrzeug gemäß Fig. 1, welcher im Wesentlichen dem in Fig. 6 dargestellten Antriebsstrang entspricht. Der Rotor R der elektrischen Maschine E ist nun nicht über einen Kettentrieb mit der Antriebswelle G1 verbunden, sondern über den Stirnradtrieb SE. Der Stirnradtrieb SE könnte auch innerhalb des Gehäuses GG des Getriebes G angeordnet sein.

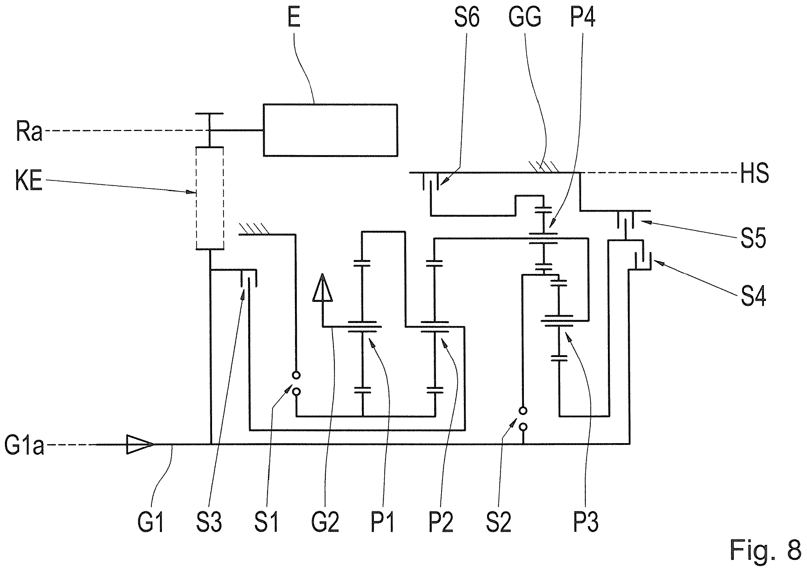

Fig. 8 zeigt eine schematische Ansicht eines Radsatzes des Getriebes G für die zuvor beschriebenen Antriebsstränge. Das Getriebe G weist vier Planetenradsätze P1, P2, P3, P4 sowie sechs Schaltelemente S1, S2, S3, S4, S5, S6 auf. Durch selektives Schließen von jeweils drei der Schaltelemente können mit der dargestellten Verknüpfung der einzelnen Planetenradsatzelemente neun Vorwärtsgänge und ein Rückwärtsgang zwischen der Antriebswelle G1 und der Abtriebswelle G2 bereitgestellt werden. Der Aufbau des Radsatzes ist lediglich beispielhaft anzusehen. Die Bildung von unterschiedlichen Übersetzungsverhältnissen ist auch mit anderen Radsatzschemata möglich.

In Fig. 8 ist nur eine Schnitthälfte des Radsatzes dargestellt Diese reduzierte Darstellung dient der besseren Übersichtlichkeit. Die in Fig. 8 gewählte Darstellung mit elektrischer Maschine E und Radsatz entspricht einer abgerollten Schnittdarstellung, um die radiale Entfernung zwischen Elementen des Radsatzes und der elektrischen Maschine E hervorzuheben. Fig. 8 zeigt dazu die Anbindung der elektrischen Maschine E an die Antriebswelle G1 über den Kettentrieb KE. Der Kettentrieb KE könnte durch den Stirnradtrieb SE ersetzt werden; dies ist aus Gründen der Übersichtlichkeit nicht dargestellt.

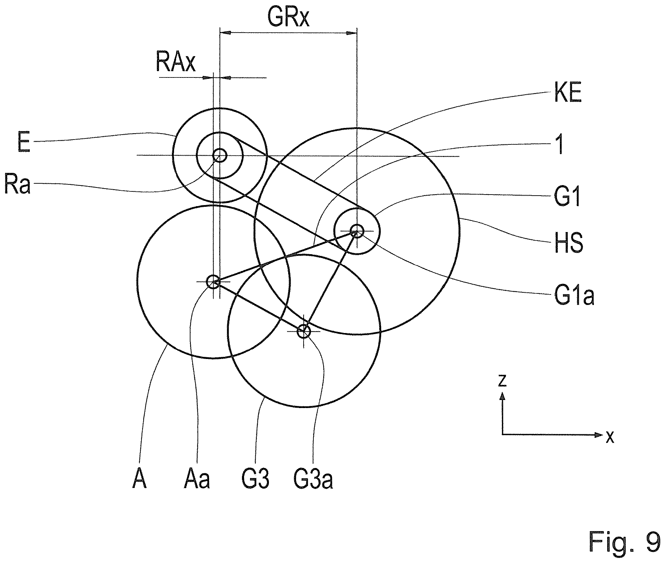

Fig. 9 zeigt eine Ansicht zur Positionierung von Antriebswelle G1, Zwischenwelle G3, Differentialgetriebe A und elektrischer Maschine E des Getriebes G. Die Ansicht entspricht einer Ebene, welche sich durch die Fahrtrichtung x und der Hochachse z des Hybridfahrzeugs ergibt. Die Anbindung der elektrischen Maschine E an die Antriebswelle G1 erfolgt über den Kettentrieb KE. Das Bezugszeichen HS kennzeichnet eine äußere Hüllkurve HS des koaxialen zur Antriebswelle G1 angeordneten Radsatzes. Aus Fig. 9 geht deutlich hervor, dass die Drehachse Ra räumlich oberhalb einer Verbindungslinie 1 zwischen der Drehachse G1a und der Drehachse Aa angeordnet ist. Die Drehachse G3a ist räumlich unterhalb der Verbindungslinie 1 angeordnet. Die Drehachsen G1a, G3a und Aa bilden ein Dreieck in der Ebene, wobei die Verbindungslinie 1 die längste Seite dieses Dreiecks bildet. Diese Seite des Dreiecks ist der elektrischen Maschine E zugewandt. Ein Abstand RAx in Fahrtrichtung x zwischen der Drehachse Aa und der Drehachse Ra ist dabei deutlich kleiner als ein Abstand GRx in Fahrtrichtung x zwischen der Drehachse G1a und der Drehachse Ra. In anderen Worten ist die elektrische Maschine in Fahrtrichtung x deutlich näher zum Differentialgetriebe A hin angeordnet als zur Antriebswelle G1.

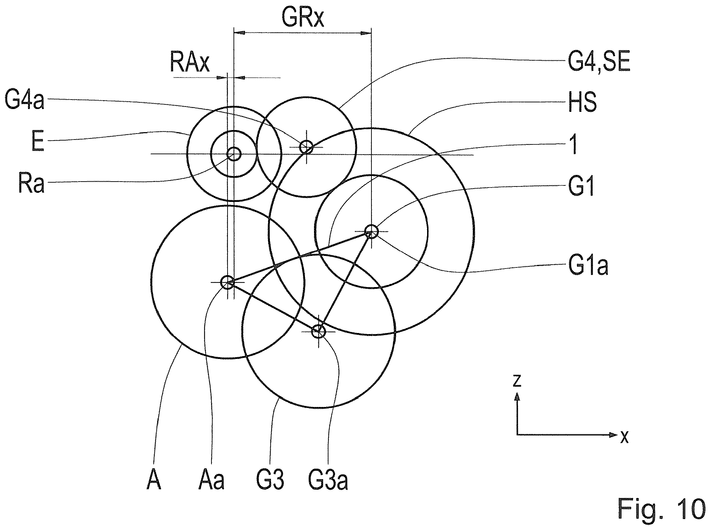

Fig. 10 zeigt eine weitere Ansicht zur Positionierung von Antriebswelle G1, Zwischenwelle G3, Differentialgetriebe A und elektrischer Maschine E des Getriebes G, welche im Wesentlichen der Darstellung in Fig. 9 entspricht. Anstelle des Kettentriebs erfolgt die Anbindung nun über den Stirntrieb SE, welcher über eine weitere Zwischenwelle G4 verfügt. Die Zwischenwelle G4 dreht um eine Drehachse G4a, welche achsparallel zur Drehachse Ra und zur Drehachse G1a angeordnet ist.

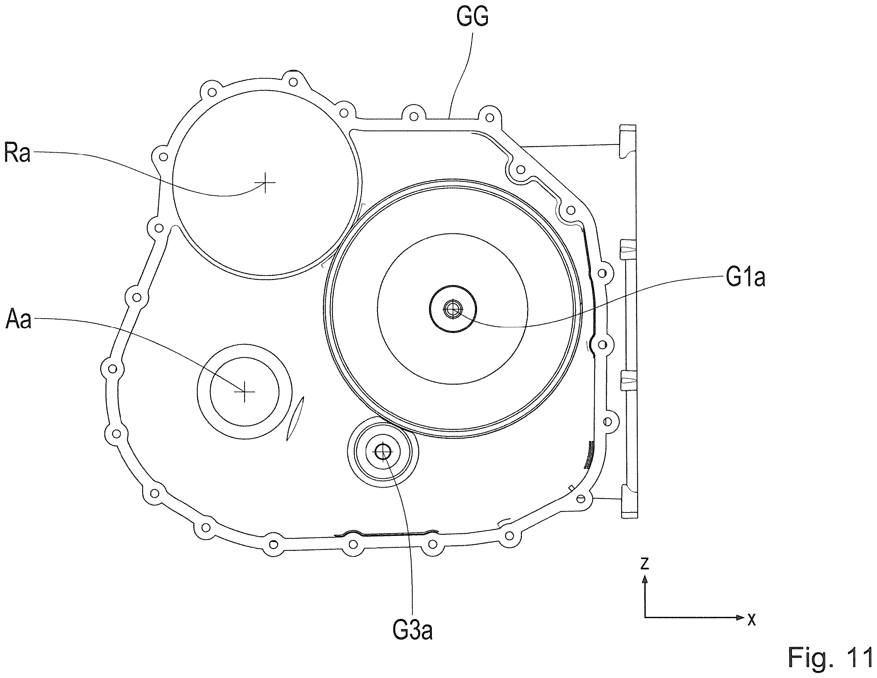

Fig. 11 zeigt eine Seitenansicht des Gehäuses GG für ein solches Getriebe G. Die Die Ansicht liegt wie in Fig. 9 und Fig. 10 in der Ebene, welche sich durch die Fahrtrichtung x und der Hochachse z des Hybridfahrzeugs ergibt. Darin ist gut erkennbar, dass das Gehäuse GG besonders kompakt gestaltet werden kann.

### Bezugszeichen

- G: Getriebe
- GG: Gehäuse
- G1: Antriebswelle
- G1a: Drehachse
- G2: Abtriebswelle
- P1-P4: Planetenradsatz
- S1-S6: Schaltelement
- HS: Hüllkurve
- Gx: Weitere Welle
- G3: Zwischenwelle
- G3a: Drehachse
- A: Differentialgetriebe
- Aa: Drehachse
- E: Elektrische Maschine
- Ra: Drehachse
- KE: Kettentrieb
- SE: Stirnradtrieb
- G4: Weitere Zwischenwelle
- G4a: Drehachse
- 1: Verbindungslinie
- GRx: Abstand
- RAx: Abstand
- x: Fahrtrichtung
- z: Hochachse
- DW: Antriebsrad
- NDW: Nicht angetriebenes Rad
- VM: Verbrennungsmotor
- TS: Torsionsschwingungsdämpfer
- K0: Kupplung

## Patentansprüche

1. Aufbau eines Getriebes (G) für ein Hybridfahrzeug mit quer zur Fahrtrichtung (x) des Hybridfahrzeugs ausgerichtetem Antriebsstrang, wobei das Getriebe (G) eine Antriebswelle (G1), eine Zwischenwelle (G3), ein Differentialgetriebe (A) und genau eine zum Antrieb des Hybridfahrzeugs eingerichtete elektrische Maschine (E) mit einem drehbaren Rotor und einem drehfesten Stator aufweist,
- wobei Antriebswelle (G1), Zwischenwelle (G3), Differentialgetriebe (A) und Rotor der elektrischen Maschine (E) achsparallel zueinander angeordnete Drehachsen (G1a, G3a, Aa, Ra) aufweisen,
- wobei die Antriebswelle (G1) eine drehmomentübertragende Schnittstelle (GV) zu einem Verbrennungsmotor (VM) des Hybridfahrzeugs bildet oder mit einer solchen Schnittstelle über eine Kupplung (K0) oder über einen Freilauf verbunden ist,
- wobei das Differentialgetriebe (A) drehmomentübertragende Schnittstellen zu mit Antriebsrädern (DW) des Hybridfahrzeugs verbundenen Antriebswellen aufweist,
- wobei das Getriebe (G) dazu eingerichtet ist, unterschiedliche Übersetzungsverhältnisse zwischen der Antriebswelle (G1) und einer koaxial zur Antriebswelle (G1) angeordneten Abtriebswelle (G2) bereitzustellen,
- wobei Drehmoment zwischen Abtriebswelle (G2) und Differentialgetriebe (AG) über die Zwischenwelle (G3) übertragen wird,
- wobei der Rotor entweder mit der Antriebswelle (G1) oder mit einer weiteren Welle (Gx) des Getriebes (G), welche an der Übersetzungsbildung des Getriebes (G) beteiligt ist, über ein konstantes Übersetzungsverhältnis ständig verbunden ist,
- wobei die Drehachse (Ra) des Rotors räumlich oberhalb einer Verbindungslinie (1) zwischen der Drehachse (G1a) der Antriebswelle (G1) und der Drehachse (Aa) des Differentialgetriebes (A) angeordnet ist,
**dadurch gekennzeichnet, dass**
- die Drehachse (G3a) der Zwischenwelle (G3) räumlich unterhalb der Verbindungslinie (1) angeordnet ist.

2. Aufbau eines Getriebes (G) nach Anspruch 1, **dadurch gekennzeichnet, dass** bei einem Dreieck, dessen Eckpunkte auf den Drehachsen (G1a, G3a, Aa) der Antriebswelle (G1), der Zwischenwelle (G3) und dem Differentialgetriebe (A) liegen, jene Seite des Dreiecks der elektrischen Maschine (E) zugewandt ist, welche die Zwischenwelle (G3) nicht berührt.

3. Aufbau eines Getriebes (G) nach einem der vorangehenden Ansprüche, **dadurch gekennzeichnet, dass** ein Abstand (RAx) in Fahrtrichtung (x) des Hybridfahrzeugs zwischen der Drehachse (Ra) des Rotors und der Drehachse (Aa) des Differentialgetriebes (A) kleiner ist als ein Abstand (GRx) in Fahrtrichtung (x) des Hybridfahrzeugs zwischen der Drehachse (G1a) der Antriebswelle (G1) und der Drehachse (Ra) des Rotors.

4. Aufbau eines Getriebes (G) nach einem der vorangehenden Ansprüche, **dadurch gekennzeichnet, dass** die unterschiedliche Übersetzungsverhältnisse zwischen der Antriebswelle (G1) und der Abtriebswelle (G2) mittels mehreren Planetenradsätzen (P1, P2, P3, P4) und damit zusammenwirkenden Schaltelementen (S1, S2, S3, S4, S5, S6) bildbar sind.

5. Aufbau eines Getriebes (G) nach einem der vorangehenden Ansprüche, **dadurch gekennzeichnet, dass** das konstante Übersetzungsverhältnis zwischen dem Rotor und der Antriebswelle (G1) oder der weiteren Welle (Gx) durch das Übersetzungsverhältnis eines Kettentriebs (KE) oder eines Stirnradtriebs (SE) bestimmt ist.

6. Antriebsstrang für ein Hybridfahrzeug mit einem Verbrennungsmotor (VM), **gekennzeichnet durch** ein gemäß einem der vorangehenden Ansprüche aufgebautes Getriebe (G).

7. Hybridfahrzeug, **gekennzeichnet durch** ein gemäß einem der Ansprüche 1 bis 5 aufgebautes Getriebe (G).

## Claims

1. Construction of a gearbox (G) for a hybrid vehicle having a drive train oriented transversely to the direction of travel (x) of the hybrid vehicle, wherein the gearbox (G) has a drive shaft (G1), an intermediate shaft (G3), a differential gear (A) and exactly one electric machine (E), which is configured to drive the hybrid vehicle and has a rotatable rotor and rotationally fixed stator,
- wherein the drive shaft (G1), intermediate shaft (G3), differential gear (A) and rotor of the electric machine (E) have axes of rotation (G1a, G3a, Aa, Ra) arranged axially parallel to one another,
- wherein the drive shaft (G1) forms a torque-transmitting interface (GV) with a combustion engine (VM) of the hybrid vehicle or is connected to such an interface via a clutch (K0) or via a freewheel,
- wherein the differential gear (A) has torque-transmitting interfaces with drive shafts connected to drive wheels (DW) of the hybrid vehicle,
- wherein the gearbox (G) is configured to provide different transmission ratios between the drive shaft (G1) and an output shaft (G2) arranged coaxially with the drive shaft (G1),
- wherein torque is transmitted between the output shaft (G2) and differential gear (AG) via the intermediate shaft (G3),
- wherein the rotor is permanently connected via a constant transmission ratio either to the drive shaft (G1) or to a further shaft (Gx) of the gearbox (G), which is involved in the formation of the transmission ratio of the gearbox (G),
- wherein the axis of rotation (Ra) of the rotor is arranged spatially above a connecting line (1) between the axis of rotation (G1a) of the drive shaft (G1) and the axis of rotation (Aa) of the differential gear (A),
**characterized in that**
- the axis of rotation (G3a) of the intermediate shaft (G3) is arranged spatially below the connecting line (1) .

2. Construction of a gearbox (G) according to Claim 1, **characterized in that** in the case of a triangle, the vertices of which lie on the axes of rotation (G1a, G3a, Aa) of the drive shaft (G1), the intermediate shaft (G3) and the differential gear (A), the electric machine (E) is faced by that side of the triangle that is not in contact with the intermediate shaft (G3).

3. Construction of a gearbox (G) according to either of the preceding claims, **characterized in that** a distance (RAx) in the direction of travel (x) of the hybrid vehicle between the axis of rotation (Ra) of the rotor and the axis of rotation (Aa) of the differential gear (A) is smaller than a distance (GRx) in the direction of travel (x) of the hybrid vehicle between the axis of rotation (G1a) of the drive shaft (G1) and the axis of rotation (Ra) of the rotor.

4. Construction of a gearbox (G) according to one of the preceding claims, **characterized in that** the different transmission ratios between the drive shaft (G1) and the output shaft (G2) are able to be formed by means of a plurality of planetary gear sets (P1, P2, P3, P4) and shifting elements (S1, S2, S3, S4, S5, S6) cooperating therewith.

5. Construction of a gearbox (G) according to one of the preceding claims, **characterized in that** the constant transmission ratio between the rotor and the drive shaft (G1) or the further shaft (Gx) is determined by the transmission ratio of a chain drive (KE) or of a spurgear drive (SE).

6. Drive train for a hybrid vehicle having a combustion engine (VM), **characterized by** a gearbox (G) constructed in accordance with one of the preceding claims.

7. Hybrid vehicle, **characterized by** a gearbox (G) constructed in accordance with one of Claims 1 to 5.

## Revendications

1. Construction d'une transmission (G) pour un véhicule hybride comprenant une chaîne cinématique orientée transversalement par rapport à la direction de conduite (x) du véhicule hybride, la transmission (G) présentant un arbre d'entraînement (G1), un arbre intermédiaire (G3), un différentiel (A) et exactement une machine électrique (E) prévue pour l'entraînement du véhicule hybride, avec un rotor rotatif et un stator fixé en rotation,
- l'arbre d'entraînement (G1), l'arbre intermédiaire (G3), le différentiel (A) et le rotor de la machine électrique (E) présentant des axes de rotation (G1a, G3a, Aa, Ra) disposés de telle sorte que les axes sont parallèles l'un à l'autre,
- l'arbre d'entraînement (G1) formant une interface transmettant le couple (GV) avec un moteur à combustion interne (VM) du véhicule hybride ou étant connecté à une telle interface par le biais d'un embrayage (K0) ou par le biais d'une roue libre,
- le différentiel (A) présentant des interfaces transmettant le couple avec des arbres d'entraînement connectés à des roues d'entraînement (DW) du véhicule hybride,
- la transmission (G) étant prévue pour fournir différents rapports de démultiplication entre l'arbre d'entraînement (G1) et un arbre de prise de force (G2) disposé coaxialement par rapport à l'arbre d'entraînement (G1),
- un couple étant transmis entre l'arbre de prise de force (G2) et le différentiel (AG) par le biais de l'arbre intermédiaire (G3),
- le rotor étant connecté en permanence soit à l'arbre d'entraînement (G1) soit à un arbre supplémentaire (Gx) de la transmission (G) qui participe à la formation de la démultiplication de la transmission (G), par le biais d'un rapport de démultiplication constant,
- l'axe de rotation (Ra) du rotor étant disposé spatialement au-dessus d'une ligne de liaison (1) entre l'axe de rotation (G1a) de l'arbre d'entraînement (G1) et l'axe de rotation (Aa) du différentiel (A),
**caractérisée en ce que**
- l'axe de rotation (G3a) de l'arbre intermédiaire (G3) est disposé spatialement en dessous de la ligne de liaison (1).

2. Construction d'une transmission (G) selon la revendication 1, **caractérisée en ce que** dans le cas d'un triangle dont les coins sont situés sur les axes de rotation (G1a, G3a, Aa) de l'arbre d'entraînement (G1), de l'arbre intermédiaire (G3) et du différentiel (A), le côté du triangle qui n'est pas en contact avec l'arbre intermédiaire (G3) est tourné vers la machine électrique (E).

3. Construction d'une transmission (G) selon l'une quelconque des revendications précédentes, **caractérisée en ce qu'**une distance (RAx) dans la direction de conduite (x) du véhicule hybride entre l'axe de rotation (Ra) du rotor et l'axe de rotation (Aa) du différentiel (A) est inférieure à une distance (GRx) dans la direction de conduite (x) du véhicule hybride entre l'axe de rotation (G1a) de l'arbre d'entraînement (G1) et l'axe de rotation (Ra) du rotor.

4. Construction d'une transmission (G) selon l'une quelconque des revendications précédentes, **caractérisée en ce que** les différents rapports de démultiplication entre l'arbre d'entraînement (G1) et l'arbre de prise de force (G2) peuvent être formés au moyen de plusieurs trains planétaires (P1, P2, P3, P4) et d'éléments de commutation (S1, S2, S3, S4, S5, S6) coopérant avec eux.

5. Construction d'une transmission (G) selon l'une quelconque des revendications précédentes, **caractérisée en ce que** le rapport de démultiplication constant entre le rotor et l'arbre d'entraînement (G1) ou l'arbre supplémentaire (Gx) est déterminé par le rapport de démultiplication d'un entraînement à chaîne (KE) ou d'un entraînement à pignons droits (SE).

6. Chaîne cinématique pour un véhicule hybride comprenant un moteur à combustion interne (VM), **caractérisée par** une transmission (G) construite selon l'une quelconque des revendications précédentes.

7. Véhicule hybride, **caractérisé par** une transmission (G) construite selon l'une quelconque des revendications 1 à 5.
